# EUROPÄISCHE PATENTSCHRIFT

(11) **EP 2 560 856 B1**
(45) Veröffentlichungstag und Bekanntmachung des Hinweises auf die Patenterteilung: **22.04.2015**
(21) Anmeldenummer: 11709040.7
(22) Anmeldetag: 02.03.2011
(51) Int. Cl.: B60W 30/188, B60W 10/02, B60W 10/06, B60W 50/06, F02D 41/00

(54) **VERFAHREN ZUR FAHRSTEUERUNG EINES KRAFTFAHRZEUGS**
DRIVE CONTROL METHOD OF A MOTOR VEHICLE
PROCÉDÉ DE CONTRÔLE D'ENTRAÎNEMENT D'UN VÉHICULE AUTOMOBILE

(30) Priorität: 22.04.2010 DE 102010028071
(43) Veröffentlichungstag der Anmeldung: 27.02.2013
(73) Patentinhaber: ZF Friedrichshafen AG, 88038 Friedrichshafen (DE)
(72) Erfinder: MAIR, Roland, 88069 Tettnang (DE)
(86) Internationale Anmeldenummer: PCT/EP2011/053113
(87) Internationale Veröffentlichungsnummer: WO 2011/131406

(56) Entgegenhaltungen:
- DE-A1- 10 330 951
- US-B2- 6 692 406

## Beschreibung

Die Erfindung betrifft ein Verfahren zur Fahrsteuerung eines Kraftfahrzeugs, dessen Antriebsstrang einen als turboaufgeladener Verbrennungsmotor ausgebildeten Antriebsmotor, eine als automatisierte Reibungskupplung ausgebildete Anfahr- und Schaltkupplung, und ein als automatisiertes Stufenschaltgetriebe ausgebildetes Fahrgetriebe umfasst, wobei eine während der Fahrt auftretende Durchzugsschwäche des Antriebsmotors überwunden wird, die bei einer einem über dem spontan erreichbaren Maximalmoment liegenden Sollmoment des Antriebsmotors entsprechenden Leistungsanforderung des Fahrers auftritt.

In Kraftfahrzeugen kommen immer häufiger automatisierte Stufenschaltgetriebe mit mindestens einer automatisierten Reibungskupplung als Anfahrund Schaltkupplung zur Anwendung, bei denen die Gangwahl, die Auslösung von Schaltvorgängen, das Ein- und Auslegen der Gangstufen sowie das Einund Ausrücken der Reibungskupplung automatisiert, d.h. durch die Auswertung von Betriebsparametern in einem Getriebesteuergerät und die Ansteuerung zugeordneter Stellantriebe, erfolgen.

Insbesondere bei Nutzfahrzeugen sind die Antriebsmotoren zumeist als von einem Turbolader aufladbare Dieselmotoren ausgebildet, die eine spezielle Lastaufbaucharakteristik aufweisen. Wie in der nicht vorveröffentlichten DE 10 2008 054 802.2, in der ein Verfahren zur Steuerung eines automatisierten Stufenschaltgetriebes in Abhängigkeit von den dynamischen Betriebseigenschaften eines turboaufgeladenen Verbrennungsmotors offenbart ist, näher erläutert ist, kann ein turboaufgeladener Verbrennungsmotor spontan, d.h. mit hohem Drehmomentgradienten, nur ein unterhalb des Volllastmomentes liegendes Saugmoment erreichen. Eine weitere Erhöhung des Motormomentes ist, wenn auch mit geringerem Drehmomentgradienten, kurzfristig nur oberhalb einer Ladegrenzdrehzahl möglich, ab welcher der Turbolader eine deutliche Erhöhung des Ladedrucks und damit des Motormomentes bewirkt. Das dynamische Verhalten eines turboaufgeladenen Verbrennungsmotors ist somit außer durch die Leerlaufdrehzahl, die Abregeldrehzahl und die Volllastmoment-Kennlinie auch durch die Ladegrenzdrehzahl und die Saugmoment-Kennlinie sowie die bereichsweise vorliegenden Momentengradienten bestimmt. Aufgrund der Begrenzung des spontan erreichbaren Motormomentes auf das Saugmoment ist bei turboaufgeladenen Verbrennungsmotoren unterhalb der Ladegrenzdrehzahl somit eine deutliche, allgemein als Turboloch bezeichnete Durchzugsschwäche zu verzeichnen, wenn eine durch die Auslenkung des Fahrpedals gegebene Leistungsanforderung des Fahrers ein über dem Saugmoment liegendes Motormoment erfordert.

Zur Vermeidung oder zumindest zur Abschwächung des unerwünschten Turbolochs sind zwar mehrere technische Lösungen bekannt geworden, wie z.B. eine verstellbare Turbinengeometrie zur Verbesserung des Ansprechverhaltens des Abgasturboladers oder Zusatzeinrichtungen zur Erhöhung des Ladedruckes bei niedriger Motordrehzahl, wie ein mechanisch antreibbarer Kompressor, ein elektrisch antreibbarer Zusatzverdichter, oder ein mechanischer oder elektrischer Antrieb der Triebwelle des Abgasturboladers. Derartige Einrichtungen sind jedoch relativ aufwendig und teuer, erhöhen den Bauraumbedarf, und stellen ein erhöhtes Störungspotential für den Betrieb des Verbrennungsmotors dar, so dass häufig darauf verzichtet wird.

Besonders bei Bergauffahrten eines beladenen Nutzfahrzeugs, die zumeist mit hoher Motorlast, d.h. einem über dem Saugmoment liegenden Motormoment, durchgeführt werden, kann sich eine Fahrsituation mit einer Durchzugsschwäche des Antriebsmotors z.B. dann einstellen, wenn der Fahrer kurzzeitig das Fahrpedal loslässt oder die Fahrpedalstellung deutlich reduziert, z.B. um ein Auffahren auf ein langsamer vorausfahrendes Kraftfahrzeug zu vermeiden. Wird dann die Fahrpedalstellung und damit die Leistungsanforderung des Fahrers wieder deutlich erhöht, z.B. weil das langsamer vorausfahrende Kraftfahrzeug abgebogen ist oder überholt werden kann, können der Ladedruck und die Motordrehzahl des Antriebsmotors soweit abgesunken sein, dass dieser das zuvor eingestellte hohe Motormoment spontan nicht mehr erreichen kann, jedoch das kurzfristig maximal erreichbare Saugmoment für die Überwindung des Fahrwiderstands nicht ausreicht.

Die Durchzugsschwäche des Antriebsmotors kann in dieser Fahrsituation entweder durch eine Schaltung in einen niedrigeren Gang oder durch ein Anfahren aus dem Stillstand oder aus geringer Rollgeschwindigkeit behoben werden. Für eine Rückschaltung muss jedoch ein niedrigerer Gang zur Verfügung stehen, welches insbesondere bei leichteren Nutzfahrzeugen aufgrund einer geringen Anzahl von Gängen des betreffenden Stufenschaltgetriebes häufig nicht der Fall ist. Zudem darf der Fahrwiderstand (Rollwiderstand + Steigungswiderstand) nicht zu hoch sein, da das Kraftfahrzeug sonst während der schaltungsbedingten Zugkraftunterbrechung zu stark verzögert wird, und dann in jedem Fall eine Anfahrt aus dem Stillstand erforderlich ist. Eine Anfahrt aus dem Stillstand ist jedoch mit Komforteinbußen und mit einer hohen thermischen und mechanischen Belastung der Reibungskupplung verbunden, und unter Umständen, z.B. bei einer Fahrt in schwerem Gelände, gar nicht mehr möglich.

Eine weitere Fahrsituation mit einer Durchzugsschwäche des Antriebsmotors kann sich bei einer Fahrt mit geringer Motorlast und geringer Motordrehzahl ergeben, wenn der Fahrer beschleunigen möchte, hierzu das spontan erreichbare Saugmoment des Antriebsmotors aber nicht ausreicht, d.h. keine Beschleunigung (Saugmoment = Fahrwiderstandsmoment) oder eine nur sehr geringe Beschleunigung (sehr kleines Überschussmoment gegenüber dem Saumoment für Beschleunigung vorhanden) möglich ist. Auch in dieser Fahrsituation kann die Durchzugsschwäche des Antriebsmotors zwar durch eine Rückschaltung behoben werden, jedoch unter Inkaufnahme der vorgenannten Risiken und Nachteile.

Zur Überwindung einer in anderen Betriebssituationen eines Kraftfahrzeugs auftretenden Durchzugsschwäche eines turboaufgeladenen Verbrennungsmotors sind bereits mehrere geeignete Verfahren vorgeschlagen worden. So ist z.B. aus der DE 102 34 428 A1 ein entsprechendes Verfahren zur Anfahrsteuerung eines Kraftfahrzeugs bekannt, dessen Antriebsstrang einen als turboaufgeladener Verbrennungsmotor ausgebildeten Antriebsmotor, ein als hydrodynamischer Drehmomentwandler ausgebildetes Anfahrelement, und ein als Planeten-Automatgetriebe ausgebildetes Fahrgetriebe umfasst. Dieses bekannte Verfahren sieht vor, dass bei einem Anfahrvorgang ein lastführendes Reibschaltelement (Schaltkupplung oder Schaltbremse) des Automatgetriebes für einen kurzen Zeitraum schlupfend betrieben wird, so dass der Verbrennungsmotor über eine erhöhte Motordrehzahl ein erhöhtes Anfahrmoment aufbauen kann.

In der US 6 692 406 B2 ist ein entsprechendes Verfahren nach dem Oberbegriff des Anspruchs 1 zur Schaltsteuerung eines Kraftfahrzeugs beschrieben, dessen Antriebsstrang einen als turboaufgeladenen Verbrennungsmotor ausgebildeten Antriebsmotor, eine als automatisierte Reibungskupplung ausgebildete Anfahr- und Schaltkupplung, und ein als automatisiertes Stufenschaltgetriebe ausgebildetes Fahrgetriebe umfasst. Dieses bekannte Verfahren sieht vor, dass bei einer Hochschaltung unter Volllast der Verbrennungsmotor derart angesteuert wird, dass der Ladedruck während des Schaltvorgangs entweder durch eine Erhöhung der Abgasenergie oder durch eine Beibehaltung der Drehzahl des Abgasturboladers aufrecht erhalten wird, und damit am Ende des Schaltvorgangs ein ausreichend hohes Motormoment aufgebaut werden kann.

Aufgrund unterschiedlicher Betriebssituationen und anderer technischer Voraussetzungen sind die beiden genannten Verfahren jedoch nicht ohne weiteres auf die vorliegende Problemstellung übertragbar.

Der Erfindung liegt daher die Aufgabe zugrunde, ein Verfahren zur Fahrsteuerung eines Kraftfahrzeugs der eingangs genannten Art vorzuschlagen, mit dem eine während der Fahrt auftretende Durchzugsschwäche des Antriebsmotors ohne die Durchführung einer Rückschaltung oder einer Anfahrt aus dem Stillstand überwunden werden kann.

Diese Aufgabe ist erfindungsgemäß in Verbindung mit den Merkmalen des Oberbegriffs des Anspruchs 1 dadurch gelöst, dass zunächst die Reibungskupplung bis zum Übergang in den Schlupfbetrieb geöffnet wird, und zwar so lange, bis der Antriebsmotor bis an die Ladegrenzdrehzahl n_{L_min} oder eine geringfügig über der Ladegrenzdrehzahl n_{L_min} liegende Motordrehzahl n_{M} beschleunigt hat n_{M} = n_{L_min}; n_{M} = n_{L_min} + Δn_{M}, und dass der Antriebsmotor dann bei weitgehend konstanter Motordrehzahl n_{M} ≈ n_{L_min} bis nahe an das Volllastmoment M_{VL}(n_{L_min}) belastet wird, bevor der Schlupfbetrieb der Reibungskupplung beendet wird.

Vorteilhafte Ausgestaltungen und Weiterbildungen des erfindungsgemäßen Verfahrens sind Gegenstand der Unteransprüche

Die Erfindung geht demnach aus von einem an sich bekannten Kraftfahrzeug, insbesondere einem Nutzfahrzeug, dessen Antriebsstrang einen als turboaufgeladener Verbrennungsmotor ausgebildeten Antriebsmotor, ein als automatisierte Reibungskupplung ausgebildetes Anfahrelement, und ein als automatisiertes Stufenschaltgetriebe ausgebildetes Fahrgetriebe umfasst. Bei einem derartigen Kraftfahrzeug kann während der Fahrt eine Durchzugsschwäche des Antriebsmotors auftreten, die sich darin äußert, dass die durch die Fahrpedalstellung gegebene Leistungsanforderung des Fahrers einem Sollmoment Mₛₒₗₗ des Antriebsmotors entspricht, das dieser spontan nicht erreichen kann, d.h. das über dem spontan erreichbaren Maximalmoment Mₘₐₓ des Antriebsmotors liegt.

Um diese Drehmomentschwäche des Antriebsmotors ohne eine Rückschaltung und ohne eine Anfahrt aus dem Stillstand überwinden zu können, sieht das erfindungsgemäße Verfahren vor, dass die Reibungskupplung bis zum Eintritt in den Schlupfbetrieb geöffnet wird, so dass der Antriebsmotor zumindest bis zur Ladegrenzdrehzahl n_{L_min} beschleunigt, ab welcher der Abgasturbolader einen höheren Ladedruck und der Antriebsmotor somit ein höheres Motormoment M_{M} aufbauen kann.

Eine mögliche Drehzahlerhöhung Δn_{M} von etwa 50 min⁻¹ bis 100 min⁻¹ über die Ladegrenzdrehzahl n_{L_min} hinaus dient als Steuerungsreserve zum Ausgleich von Signalungenauigkeiten und Störungen, durch die ein Absinken der Motordrehzahl n_{M} unter die Ladegrenzdrehzahl n_{L_min} und ein dadurch verursachter Rückfall des Motormomentes M_{M} auf das Saugmoment M_{S} vermieden werden können.

Nachfolgend wird gemäß dem Verfahren nach der Erfindung das Motormoment M_{M} durch ein koordiniertes Schließen der Reibungskupplung und eine Erhöhung der Motorleistung des Antriebsmotors bei weitgehend konstanter Motordrehzahl (n_{M} ≈ n_{L_min}) bis an das Volllastmoment M_{VL}(n_{L_min}) erhöht, bevor der Schlupfbetrieb der Reibungskupplung beendet wird.

Somit wird in Abhängigkeit von den dynamischen Betriebseigenschaften des Antriebsmotors ein erhöhtes Motormoment (M_{M} = M_{VL}(n_{L_min}) zur Verfügung gestellt, mit dem die Drehmomentschwäche des Antriebsmotors überwunden ist, und das in den meisten Betriebssituationen ausreicht, um die Fahrt ohne eine Rückschaltung oder eine Anfahrt aus dem Stillstand fortzusetzen.

Die die dynamischen Betriebseigenschaften des Verbrennungsmotors repräsentierenden Daten können entweder unmittelbar dem Motorsteuergerät oder einem Datenspeicher des Getriebesteuergerätes entnommen werden. Wie schon in der DE 10 2008 054 802.2 beschrieben ist, können die betreffenden Daten am Ende der Fertigungsstrecke des Kraftfahrzeugs entsprechend der Fahrzeugkonfiguration auf den Datenspeicher des Getriebesteuergerätes übertragen und während des späteren Fahrbetriebs durch den Abgleich mit aktuellen Betriebsdaten insbesondere des Antriebsmotors adaptiert, d.h. an geänderte Betriebseigenschaften angepasst werden. Durch den Zugriff auf die derart aktualisierten Daten passt sich auch das vorliegende Verfahren zur Fahrsteuerung selbsttätig an geänderte Betriebseigenschaften des Kraftfahrzeugs bzw. des Antriebsmotors an.

Hinsichtlich der Beendigung des Schlupfbetriebs der Reibungskupplung sind im Wesentlichen drei Varianten möglich, die sich im Fahrkomfort, in der thermischen Belastung der Reibungskupplung, und in dem letztlich erzielbaren Motormoment M_{M} voneinander unterscheiden.

Gemäß einer ersten Verfahrensvariante ist vorgesehen, dass die Motordrehzahl n_{M} durch ein weiteres Schließen der Reibungskupplung und/oder durch einen Eingriff in die Motorsteuerung auf die Getriebeeingangsdrehzahl n_{GE} abgesenkt (n_{M} = n_{GE}, n_{M} < n_{L_min}) und dann die Reibungskupplung vollständig geschlossen wird. Diese Verfahrensvariante, die bevorzugt dann angewendet wird, wenn das aktuelle Motormoment M_{M}(n_{L_min}) deutlich über dem Sollmoment Mₛₒₗₗ des Antriebsmotors liegt (M_{M}(n_{L_min}) >> Mₛₒₗₗ), ist zwar mit einem als unkomfortabel anzusehenden ruckartigen Übergang in den normalen Fahrbetrieb (mit geschlossener Reibungskupplung) verbunden, sie führt aber aufgrund der verkürzten Schlupfphase zu einer sehr geringen thermischen Belastung der Reibungskupplung.

In einer zweiten Verfahrensvariante, die bevorzugt dann angewendet wird, wenn das aktuelle Motormoment M_{M}(n_{L_min}) weitgehend dem Sollmoment Mₛₒₗₗ des Antriebsmotors entspricht oder geringfügig über diesem liegt ((M_{M}(n_{L_min}) ≥ Mₛₒₗₗ), ist dagegen vorgesehen, dass der Antriebsmotor auf der aktuellen Motordrehzahl (n_{M} = n_{L_min}) und die Reibungskupplung auf dem aktuellen Öffnungsgrad gehalten wird, bis sich an der Reibungskupplung zwischen deren Eingangs- und Ausgangsseite Synchronlauf eingestellt hat (n_{M} = n_{GE}), und dann die Reibungskupplung vollständig geschlossen wird. Aufgrund der konstant gehaltenen Motordrehzahl (n_{M} = n_{L_min}) ergibt sich bei dieser Verfahrensvariante ein weitgehend ruckfreier und somit komfortabler Übergang in den normalen Fahrbetrieb. Es ergibt sich jedoch eine verlängerte Schlupfphase, die zu einer erhöhten thermischen Belastung der Reibungskupplung führt.

In einer dritten Verfahrensvariante ist vorgesehen, dass der Antriebsmotor durch eine Erhöhung der Motorleistung und ein weiteres Schließen der Reibungskupplung auf eine höhere Motordrehzahl (n_{M} > n_{L_min}) und ein höheres Motormoment (M_{M} > M_{VL}(n_{L_min})) eingestellt und dort gehalten wird, bis sich an der Reibungskupplung zwischen deren Eingangs- und Ausgangsseite Synchronlauf eingestellt hat (n_{M} = n_{GE}), und dann die Reibungskupplung vollständig geschlossen wird. Diese Verfahrensvariante wird bevorzugt dann angewendet, wenn das aktuelle Motormoment M_{M}(n_{L_min}) deutlich unter dem Sollmoment Mₛₒₗₗ des Antriebsmotors liegt (M_{M}(n_{L_min}) << Mₛₒₗₗ). Auch bei dieser Verfahrensvariante ergibt sich ein weitgehend ruckfreier und komfortabler Übergang in den normalen Fahrbetrieb, jedoch auch eine weiter verlängerte Schlupfphase mit einer erhöhten thermischen Belastung der Reibungskupplung.

Zur Erkennung einer vorliegenden oder unmittelbar bevorstehenden Durchzugsschwäche des Antriebsmotors und somit zur Auslösung des erfindungsgemäßen Verfahrens können verschiedene Kriterien allein oder in Kombination miteinander geprüft werden.

So kann eine vorliegende oder unmittelbar bevorstehende Durchzugsschwäche des Antriebsmotors dadurch erkannt werden, dass das aktuelle Motormoment M_{M} kleiner oder gleich dem Saugmoment M_{S} des Antriebsmotors ist (Mₘ ≤ M_{S}), dass die aktuelle Motordrehzahl n_{M} kleiner als die Ladegrenzdrehzahl n_{L_min} des Antriebsmotors ist (n_{M} < n_{L_min}), und dass das Sollmoment Mₛₒₗₗ des Antriebsmotors über dem Saugmoment Ms des Antriebsmotors liegt (Mₛₒₗₗ > Ms).

Ebenso kann eine vorliegende oder unmittelbar bevorstehende Durchzugsschwäche des Antriebsmotors dadurch erkannt werden, dass das aktuelle Fahrwiderstandsmoment M_{FW} größer als das spontan abrufbare Maximalmoment Mₘₐₓ des Antriebsmotors ist (M_{FW} > Mₘₐₓ), und dass das Sollmoment Mₛₒₗₗ des Antriebsmotors über dem aktuellen Fahrwiderstandsmoment M_{FW} liegt (Mₛₒₗₗ > M_{FW}).

Auch kann eine vorliegende oder unmittelbar bevorstehende Durchzugsschwäche des Antriebsmotors dadurch erkannt werden, dass der aktuelle Ladedruck p_{L} des Antriebsmotors kleiner als ein für einen Ladedruckaufbau durch den Abgasturbolader kennzeichnender Ladedruckgrenzwert p_{L_min} ist (p_{L} < p_{L_min}), und dass der Antriebsmotor für die Erzeugung des Sollmomentes Mₛₒₗₗ einen über dem Ladedruckgrenzwert p_{L_min} liegenden Ladedruck (p_{L} ≥ p_{L_min}) benötigt (Mₛₒₗₗ > Ms).

Zudem ist es sinnvoll, die Durchführung des Verfahrens von bestimmten fahrzeugspezifischen, umgebungsspezifischen und einsatzspezifischen Kriterien abhängig zu machen.

So ist es z.B. zweckmäßig, das durch die erfindungsgemäße Fahrsteuerung erreichbare Motormoment M_{VL}(n_{M}) vorab zu ermitteln, und die erfindungsgemäße Fahrsteuerung nur dann durchzuführen, wenn das erreichbare Motormoment M_{VL}(n_{M}) zumindest dem aktuellen Fahrwiderstandsmoment M_{FW} entspricht (M_{VL}(n_{M}) ≥ M_{FW}). Liegt nämlich das durch das Verfahren erreichbare Motormoment M_{VL}(n_{M}) unter dem Fahrwiderstand M_{FW} (M_{VL}(n_{M}) < M_{FW}), würde dies zu einer Verzögerung des Kraftfahrzeugs führen, so dass in diesem Fall eine Rückschaltung oder eine Anfahrt aus dem Stillstand unvermeidbar ist und daher die Durchführung der erfindungsgemäßen Fahrsteuerung keinen Sinn macht.

Bei dieser Vorgehensweise kann das durch die erfindungsgemäße Fahrsteuerung erreichbare Motormoment M_{M}(n_{M}) aus der Volllast-Kennlinie des Antriebsmotors zu diesem Zweck vereinfacht als das bei der aktuellen Motordrehzahl n_{M} einstellbare Volllastmoment M_{VL}(n_{M}) bestimmt werden.

Insbesondere bei den beiden letztgenannten Verfahrensvarianten ist die thermische Belastung der Reibungskupplung aufgrund der langen Schlupfphasen relativ hoch und kann daher zulässige Belastungsgrenzen überschreiten. Es ist daher sinnvoll, dass die durch die erfindungsgemäße Fahrsteuerung bewirkte thermische Belastung der Reibungskupplung vorab ermittelt wird, und dass die erfindungsgemäße Fahrsteuerung nur dann durchgeführt wird, wenn die thermische Belastung der Reibungskupplung einen vorgegebenen Belastungsgrenzwert nicht überschreitet.

Auch kann die Aktivierung oder Nichtaktivierung der erfindungsgemäßen Fahrsteuerung von dem aktuell eingelegten Gang abhängig gemacht werden.

So kann vorgesehen sein, dass die erfindungsgemäße Fahrsteuerung nur dann durchgeführt wird, wenn der aktuell eingelegte Gang einen vorab festgelegten Maximalgang nicht übersteigt. Die Beschränkung der Anwendung des erfindungsgemäßen Verfahrens durch einen Maximalgang kann z.B. der Begrenzung der Belastung der Reibungskupplung dienen.

Ein gangspezifisches Kriterium kann jedoch auch darin bestehen, dass die erfindungsgemäße Fahrsteuerung nur dann durchgeführt wird, wenn kein niedrigerer Gang für eine Rückschaltung verfügbar ist. Dies ist dann der Fall, wenn der aktuell eingelegte Gang bereits der niedrigste Gang (erster Gang) des Stufenschaltgetriebes ist, oder wenn aufgrund einer Störung nicht in einen niedrigeren Gang geschaltet werden kann. In diesem Fall bildet das erfindungsgemäße Verfahren somit ein Notverfahren für den Fall, dass eine Rückschaltung nicht möglich ist.

Ein weiteres gangspezifisches Kriterium kann darin bestehen, dass die erfindungsgemäße Fahrsteuerung nur dann durchgeführt wird, wenn der aktuell eingelegte Gang dem unter den aktuellen Betriebs- und Umgebungsbedingungen, die im wesentlichen durch die Fahrzeugmasse, die Fahrbahnsteigung und die Fahrbahnbeschaffenheit bestimmt sind, vorgesehenen Anfahrgang entspricht. Auch in diesem Fall bildet das erfindungsgemäße Verfahren ein Notverfahren, mit dem eine hinsichtlich Fahrkomfort und Kupplungsverschleiß ungünstigere Anfahrt aus dem Stillstand vermieden wird.

Ebenso kann vorgesehen sein, dass die erfindungsgemäße Fahrsteuerung nur dann durchgeführt wird, wenn eine Rückschaltung unter den aktuellen Betriebs- und Umgebungsbedingungen, d.h. aufgrund eines hohen Roll- und Steigungswiderstands, zu einem Fahrzeugstillstand und einem anschließenden Anfahren führen würde. In diesem Fall bildet das erfindungsgemäße Verfahren somit ebenfalls ein Notverfahren, mit dem eine Anfahrt unter schwierigen Bedingungen, wie z.B. in schwerem Gelände, und damit ein mögliches Liegenbleiben des Kraftfahrzeugs vermieden werden kann.

Ein weiteres Kriterium zur Aktivierung des erfindungsgemäßen Verfahrens kann darin bestehen, dass die erfindungsgemäße Fahrsteuerung nur dann durchgeführt wird, wenn die Fahrpedalstellung eine vorab festgelegte Grenzstellung erreicht oder überschritten hat. Bei dieser Grenzstellung des Fahrpedals kann es sich z.B. um die KickDown-Stellung handeln, mit der üblicherweise eine Rückschaltung ausgelöst wird. Mit diesem Kriterium ist sichergestellt, dass die erfindungsgemäße Fahrsteuerung nur bei hoher Leistungsanforderung des Fahrers aktiviert wird.

Schließlich kann vorgesehen sein, dass die erfindungsgemäße Fahrsteuerung nur dann durchgeführt wird, wenn diese als fahrzeugspezifische oder einsatzspezifische Sonderfunktion freigegeben bzw. freigeschaltet ist. So ist es z.B. möglich, dass die erfindungsgemäße Fahrsteuerung nur bei bestimmten Einsatzfahrzeugen, wie Feuerwehr-, Rettungs-, und Militärfahrzeugen, verfügbar bzw. freigeschaltet ist, oder nur für spezielle Einsätze, wie z.B. Offroad-Fahrten, freigeschaltet werden kann, in Standardfahrzeugen bzw. im normalen Fahrbetrieb jedoch nicht verfügbar bzw. gesperrt ist.

Zur Verdeutlichung der Erfindung ist der Beschreibung eine Zeichnung mit einem Ausführungsbeispiel beigefügt. In diesen zeigt
- Fig. 1: eine erfindungsgemäße Behebung einer während der Fahrt auftretenden Durchzugsschwäche eines turboaufgeladenen Verbrennungsmotors in einem Motorkennfeld,
- Fig. 2: relevante Drehzahl- und Drehmomentverläufe für das Beispiel in Fig. 1,
- Fig. 3: ein Motordynamik-Kennfeld eines turboaufgeladenen Verbrennungsmotors,
- Fig. 4a: den Drehmomentaufbau eines Verbrennungsmotors nach Fig. 4 bei einer unterhalb der Ladegrenzdrehzahl geführten Motordrehzahl (n_{M} ≤ n_{L_min}), und
- Fig. 4b: den Drehmomentaufbau eines Verbrennungsmotors nach Fig. 4 bei einer über die Ladegrenzdrehzahl geführten Motordrehzahl (n_{M} > n_{L_min}).

Ein vorliegend vorausgesetzter Antriebsstrang eines Nutzfahrzeugs umfasst einen als turboaufgeladener Verbrennungsmotor ausgebildeten Antriebsmotor, eine als automatisierte Reibungskupplung ausgebildete Anfahr- und Schaltkupplung und ein als automatisiertes Stufenschaltgetriebe ausgebildetes Fahrgetriebe.

Das Stufenschaltgetriebe ist eingangsseitig über die Reibungskupplung mit der Triebwelle (Kurbelwelle) des Verbrennungsmotors verbindbar und steht ausgangsseitig über eine Kardanwelle mit dem Achsgetriebe (Achsdifferenzial) einer Antriebsachse in Verbindung. An dem Verbrennungsmotor ist mindestens ein Nebenaggregat und gegebenenfalls mindestens ein antriebsseitiger Nebenabtrieb angeordnet, die im angetriebenen Zustand das von dem Verbrennungsmotor an der Reibungskupplung abgebbare und für den Antrieb des Kraftfahrzeugs verfügbare Motormoment M_{M} reduzieren. Des weiteren können weitere abtriebsseitige Nebenabtriebe an dem Stufenschaltgetriebe oder dem Achsgetriebe angeordnet sein, die im aktivierten Zustand das über die Reibungskupplung in das Stufenschaltgetriebe eingeleitete Motormoment M_{M} weiter reduzieren, so dass im Fahrbetrieb ein entsprechend reduziertes Drehmoment für die Überwindung des Fahrwiderstands und die Erzielung einer zumindest minimalen Fahrbeschleunigung zur Verfügung steht.

Der Verbrennungsmotor muss im Fahrbetrieb somit ein Motormoment M_{M} erzeugen und an der Reibungskupplung abgeben können, das abzüglich der Antriebsmomente für die Nebenaggregate und die antriebsseitigen Nebenabtriebe ausreicht, um eine akzeptablen Fahrbeschleunigung erzielen zu können. Hierzu muss das von der Reibungskupplung übertragene Motormoment M_{M} so hoch sein, dass es abzüglich der Antriebsmomente für die abtriebsseitigen Nebenabtriebe das aus dem aktuellen Fahrwiderstand resultierende, d.h. mit der Gesamtübersetzung und dem Wirkungsgrad des Antriebsstrangs auf die Eingangswelle des Stufenschaltgetriebes reduzierte Fahrwiderstandsmoment M_{FW} so weit übertrifft, dass das überschüssige Drehmoment zumindest für eine minimale Fahrbeschleunigung ausreicht.

Die vorliegende Erfindung schlägt ein Verfahren vor, mit dem eine während der Fahrt auftretende Durchzugsschwäche des Antriebsmotors überwunden wird, die bei einer einem über dem spontan erreichbaren Maximalmoment Mₘₐₓ liegenden Sollmoment Mₛₒₗₗ des Antriebsmotors entsprechenden und durch die Fahrpedalstellung gegebenen Leistungsanforderung des Fahrers auftritt, ohne dass dazu eine Rückschaltung oder einer Anfahrt aus dem Stillstand durchführen zu müssen.

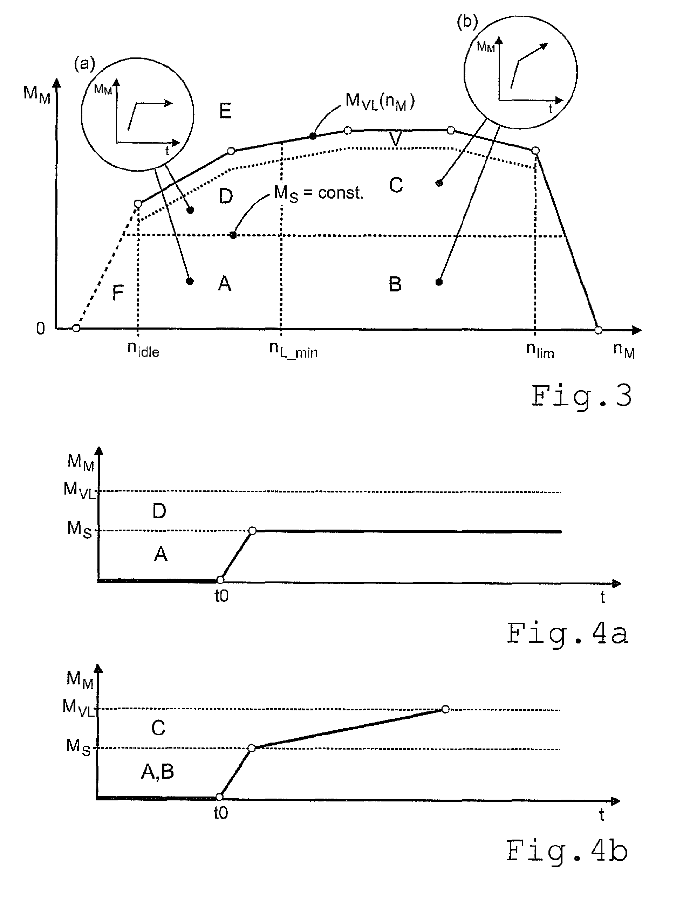

Hierzu sind die dynamischen Betriebseigenschaften des als turboaufgeladener Verbrennungsmotor ausgebildeten Antriebsmotors von Bedeutung, die einem aus der DE 10 2008 054 802.2 bekannten Motordynamik-Kennfeld entnehmbar sind, das in einem Datenspeicher des Getriebesteuergerätes abgelegt sein kann und beispielhaft in Fig. 3 abgebildet ist.

Das in Fig. 3 in einem Drehmoment-Drehzahl-Diagramm dargestellte Motordynamik-Kennfeld enthält das spontan abrufbare Maximalmoment Mₘₐₓ des Verbrennungsmotors und den maximalen Momentengradienten (*d*M_{M}/*d*t)ₘₐₓ, mit dem das spontan abrufbare Maximalmoment Mₘₐₓ des Verbrennungsmotors schnellstmöglich erreichbar ist, jeweils als Funktion des aktuellen Motormomentes M_{M} und der aktuellen Motordrehzahl n_{M} (Mₘₐₓ = f(M_{M}, n_{M}), (*d*M_{M}/*d*t)ₘₐₓ = f(M_{M}, n_{M})).

Das Motordynamik-Kennfeld ist begrenzt durch die stationäre Volllast-Drehmomentkennlinie M_{VL}(n_{M}), die Nullmomentlinie (M_{M} = 0), die Leerlaufdrehzahl n_{idle} und die Abregeldrehzahl nₗᵢₘ des Verbrennungsmotors. Durch die Saugmomentkennlinie M_{S}(n_{M}) des hier vereinfacht als konstant angenommenen Saugmomentes M_{S} = const. und die Ladegrenzdrehzahl n_{L_min} des Verbrennungsmotors ist das Motordynamik-Kennfeld zudem in vier Betriebsbereiche A, B, C, D unterteilt.

In dem unterhalb der Saugmomentkennlinie M_{S} = const. und unterhalb der Ladegrenzdrehzahl n_{L_min} liegenden ersten Betriebsbereich A (0 ≤ M_{M} < Ms, n_{idle} ≤ n_{M} < n_{L_min}) wird das spontan abrufbare Maximalmoment Mₘₐₓ(n_{M}) des Verbrennungsmotors jeweils durch den entsprechenden Wert des Saugmomentes Ms gebildet (Mₘₐₓ(n_{M}) = Ms). Da das Saugmoment M_{S} in diesem Bereich konstant ist (M_{S} = const.), wird das spontan abrufbare Maximalmoment Mₘₐₓ des Verbrennungsmotors durch einen einzigen Wert repräsentiert (Mₘₐₓ = M_{S} = const.). Unabhängig davon kann auch der in diesem Bereich sehr hohe maximale Momentengradient (*d*M_{M}/*d*t)ₘₐₓ im Betriebsbereich A durch einen einzigen Wert wiedergegeben werden.

In dem unterhalb der Saugmomentkennlinie M_{S} = const. und oberhalb der Ladegrenzdrehzahl n_{L_min} liegenden zweiten Betriebsbereich B (0 ≤ M_{M} < Ms, n_{L_min} ≤ n_{M} ≤ nₗᵢₘ) wird das spontan abrufbare Maximalmoment Mₘₐₓ(n_{M}) des Verbrennungsmotors jeweils ebenfalls durch den entsprechenden Wert des Saugmomentes M_{S} gebildet. Da das Saugmoment M_{S} auch in diesem Betriebsbereich einen konstanten Verlauf aufweist (M_{S} = const.), wird das spontan abrufbare Maximalmoment Mₘₐₓ des Verbrennungsmotors in Betriebsbereich B ebenfalls durch einen einzigen Wert repräsentiert (Mₘₐₓ = Ms = const.). Wie schon in Betriebsbereich A kann auch in Betriebsbereich B der unterhalb der Saugmomentkennlinie M_{S} = const. sehr hohe maximale Momentengradient (*d*M_{M}/*d*t)ₘₐₓ durch einen einzigen Wert wiedergegeben werden.

In dem an den Betriebsbereich B angrenzenden, oberhalb der Saugmomentkennlinie Ms = const. und oberhalb der Ladegrenzdrehzahl n_{L_min} liegenden dritten Betriebsbereich C (M_{S} ≤ M_{M} < M_{VL}(n_{M}), n_{L_min} ≤ n_{M} ≤ nₗᵢₘ) ist eine weitere Erhöhung des Motormomentes M_{M} bis zu dem jeweiligen Wert der stationären Volllast-Drehmomentkennlinie M_{VL}(n_{M}) möglich, jedoch mit einem deutlich geringeren maximalen Momentengradienten (*d*M_{M}/*d*t)ₘₐₓ als in den Betriebsbereichen A und B, d.h. unterhalb der Saugmomentkennlinie M_{S} = const..

In dem an den Betriebsbereich A angrenzenden, oberhalb der Saugmomentkennlinie M_{S} = const. und unterhalb der Ladegrenzdrehzahl n_{L_min} liegenden vierten Betriebsbereich D (M_{S} ≤ M_{M} < M_{VL}(n_{M}), n_{idle} ≤ n_{M} < n_{L_min}) ist ohne eine Erhöhung der Motordrehzahl n_{M} über die Ladegrenzdrehzahl n_{L_min} eine weitere Erhöhung des Motormomentes M_{M} kurzfristig nicht möglich. Demzufolge sind im Betriebsbereich D das spontan abrufbare Maximalmoment Mₘₐₓ(n_{M}) des Verbrennungsmotors gleich dem entsprechenden Wert des Saugmomentes M_{S} (Mₘₐₓ(n_{M}) = Ms = const.) und der maximale Momentengradient (*d*M_{M}/*d*t)ₘₐₓ gleich Null ((*d*M_{M}/*d*t)ₘₐₓ = 0).

Oberhalb der Volllast-Drehmomentkennlinie M_{VL}(n_{M}) kann ein Betriebsbereich E definiert werden, der im normalen Fahrbetrieb nicht erreichbar und somit irrelevant ist. Unterhalb der Volllast-Drehmomentkennlinie M_{VL}(n_{M}) und der Leerlaufdrehzahl n_{idle} liegt ein an sich unerwünschter, aber technisch erreichbarer Betriebsbereich F, in den der Verbrennungsmotor von einer nahe der Leerlaufdrehzahl n_{idle} liegenden Motordrehzahl n_{M} aus, beispielsweise durch ein schnelles Schließen der Reibungskupplung, hinsichtlich seines Betriebsverhaltens dynamisch hineingedrückt werden kann, und in dem die Gefahr eines Absterbens des Verbrennungsmotors besteht.

Des weiteren kann ein unmittelbar unterhalb der Volllast-Drehmomentkennlinie M_{VL}(n_{M}) liegender Nahbereich als zusätzlicher Betriebsbereich V definiert werden, in dem der Verbrennungsmotor unter Volllast, d.h. entlang der Volllast-Drehmomentkennlinie M_{VL}(n_{M}), auf eine niedrigere Motordrehzahl n_{M} gedrückt oder auf eine höhere Motordrehzahl n_{M} gesteuert werden kann.

Für die hier betrachteten Fahrzustände, bei denen der Antriebsmotor von einer unterhalb der Ladegrenzdrehzahl n_{L_min} liegenden Motordrehzahl n_{M} auf eine über der Ladegrenzdrehzahl n_{L_min} liegende Motordrehzahl n_{M} sowie von einem unter dem Saugmoment M_{S} liegenden Motormoment M_{M} auf ein über dem Saugmoment M_{S} liegendes Motormoment M_{M} geführt werden soll, ist demnach festzuhalten, dass der Antriebsmotor spontan, d.h. mit hohem Momentengradienten *d*M_{M}/*d*t, nur bis an das Saugmoment M_{S} belastet werden kann, wenn die Motordrehzahl n_{M} unter der Ladegrenzdrehzahl n_{L_min} bleibt. Dieser Zusammenhang ist stark vereinfacht in dem Momentenverlauf M_{M}(t) in Teilbild (a) von Fig. 3 und in dem Zeitverlauf von Fig. 4a dargestellt.

Ebenso ist für die vorliegende Fahrsteuerung festzuhalten, dass der Antriebsmotor zur spontanen Einstellung eines über dem Saugmoment M_{S} liegenden Motormomentes M_{M} über die Ladegrenzdrehzahl n_{L_min} beschleunigt, d.h. von dem Betriebsbereich A in den Betriebsbereich B bzw. C gesteuert werden muss, da erst oberhalb der Ladegrenzdrehzahl n_{L_min}, wenn auch mit niedrigerem Momentengradienten *d*M_{M}/*d*t, eine weitere schnelle Erhöhung des Motormomentes M_{M} möglich ist. Dieser Zusammenhang ist stark vereinfacht in dem Momentenverlauf M_{M}(t) in Teilbild (b) von Fig. 3 und in dem Zeitverlauf von Fig. 4b veranschaulicht.

In dem vorliegenden Verfahren zur Fahrsteuerung ist erfindungsgemäß vorgesehen, dass die Behebung einer Durchzugsschwäche des Antriebsmotors in Abhängigkeit seiner dynamischen Betriebseigenschaften derart erfolgt, dass zunächst die Reibungskupplung bis zum Übergang in den Schlupfbetrieb geöffnet wird, bis der Antriebsmotor bis an die Ladegrenzdrehzahl n_{L_min} oder eine geringfügig über der Ladegrenzdrehzahl n_{L_min} liegende Motordrehzahl n_{M} beschleunigt hat (n_{M} = n_{L_min} ; n_{M} = n_{L_min} + Δn_{M}). Anschließend wird der Antriebsmotor dann durch eine entsprechende Erhöhung der Motorleistung und durch ein damit koordiniertes Schließen der Reibungskupplung bei weitgehend konstanter Motordrehzahl (n_{M} ≈ n_{L_min}) bis nahe an das Volllastmoment M_{VL}(n_{L_min}) belastet, bevor der Schlupfbetrieb der Reibungskupplung beendet wird.

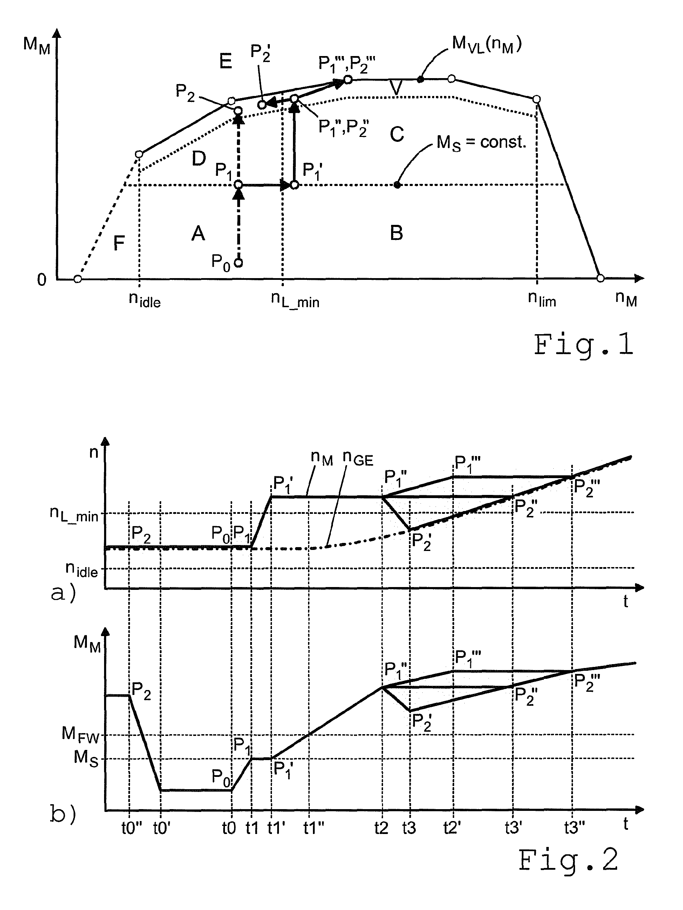

Drei Varianten einer entsprechenden Drehzahl- und Drehmomentführung des Verbrennungsmotors sind in Fig. 1 in einem Motordynamik-Kennfeld gemäß Fig. 3 und in Fig. 2a und Fig. 2b mit den jeweiligen Zeitverläufen der Motordrehzahl n_{M}, der Getriebeeingangsdrehzahl n_{GE} und des Motormomentes M_{M} dargestellt.

Ausgehend von einem Fahrbetriebszustand mit hohem Motormoment M_{M} und relativ niedriger Motordrehzahl n_{M} zum Zeitpunkt t0" (Betriebspunkt P₂) wird die Leistungsanforderung des Fahrers durch eine Reduzierung der Fahrpedalstellung oder ein Loslassen des Fahrpedals deutlich reduziert, so dass das Motormoment M_{M} bei weitgehend konstanter Motordrehzahl n_{M} bis zum Zeitpunkt t0' unter das Saugmoment M_{S} absinkt (Betriebspunkt P₀).

Wenn der Fahrer dann kurz danach (zum Zeitpunkt t0) durch eine entsprechende Fahrpedalbetätigung die Leistungsanforderung wieder auf das alte Niveau oder darüber hinaus erhöht, kann der Antriebsmotor das Motormoment M_{M} aufgrund seiner dynamischen Betriebseigenschaften kurzfristig, d.h. mit hohem Momentengradient *d*M_{M}/*d*t, nur bis zum Saugmoment M_{S} erhöhen (Betriebspunkt P₁, Zeitpunkt t1).

Eine in Fig. 1 mit einer gestrichelten Linie eingezeichnete Erhöhung des Motormomentes M_{M} auf das vorhergehende Niveau im Betriebspunkt P₂ ist dann nicht möglich, so dass normalerweise eine mit einer Zugkraftunterbrechung verbundene Rückschaltung oder sogar eine Anfahrt aus dem Stillstand erforderlich wäre. Spätestens in dieser Betriebssituation wird das erfindungsgemäße Verfahren aktiviert, um die Durchzugsschwäche des Antriebsmotors ohne die Durchführung einer Rückschaltung oder einer Anfahrt aus dem Stillstand zu überwinden.

Hierzu wird zunächst die Reibungskupplung zum Zeitpunkt t1 bis zum Übergang in den Schlupfbetrieb geöffnet, wodurch der Antriebsmotor bis zum Überschreiten der Ladegrenzdrehzahl n_{L_min} beschleunigt wird (Betriebspunkt P₁', Zeitpunkt t1'). Anschließend wird der Antriebsmotor durch eine entsprechende Erhöhung der Motorleistung und durch ein damit koordiniertes Schließen der Reibungskupplung bei weitgehend konstanter Motordrehzahl (n_{M} ≈ n_{L_min}) bis nahe an das Volllastmoment M_{VL}(n_{L_min}) belastet (Betriebspunkt P₁", Zeitpunkt t2), wobei zwischenzeitlich das Motormoment M_{M} zum Zeitpunkt t1" das Fahrwiderstandsmoment M_{FW} überschreitet und demzufolge das Kraftfahrzeug und die Eingangswelle des Stufenschaltgetriebes beschleunigt wird, d.h. die Getriebeeingangsdrehzahl n_{GE} ansteigt.

Mit dem Erreichen des Betriebspunktes P₁" nahe des Volllastmomentes M_{VL}(n_{L_min}) ergeben sich drei Möglichkeiten, um den Schlupfbetrieb der Reibungskupplung zu beenden und in den normalen Fahrbetrieb überzugehen.

In einer relativ unkomfortablen, jedoch die Reibungskupplung thermisch nur gering belastenden ersten Verfahrensvariante wird die Motordrehzahl n_{M} durch ein weiteres Schließen der Reibungskupplung und/oder durch einen Eingriff in die Motorsteuerung auf die Getriebeeingangsdrehzahl n_{GE} abgesenkt (n_{M} = n_{GE}, n_{M} < n_{L_min}), wodurch das Motormoment M_{M} reduziert (M_{M}<M_{VL}(nL_min)) und die Motordrehzahl n_{M} unter die Ladegrenzdrehzahl n_{L_min} abgesenkt (n_{M} < n_{L_min}) wird (Betriebspunkt P₂', Zeitpunkt t3). Anschließend wird die Reibungskupplung vollständig geschlossen und in die normale Fahrbetriebssteuerung übergegangen.

In einer komfortablen, jedoch die Reibungskupplung thermisch höher belastenden zweiten Verfahrensvariante wird der Antriebsmotor auf der aktuellen Motordrehzahl (n_{M} = n_{L_min}) und die Reibungskupplung auf dem aktuellen Öffnungsgrad gehalten, bis sich an der Reibungskupplung Synchronlauf eingestellt hat (n_{M} = n_{GE}), und daraufhin die Reibungskupplung vollständig geschlossen (Betriebspunkt P₂", Zeitpunkt t3').

In einer ebenfalls komfortablen, jedoch die Reibungskupplung thermisch noch höher belastenden dritten Verfahrensvariante wird der Antriebsmotor durch eine Erhöhung der Motorleistung und ein weiteres Schließen der Reibungskupplung auf eine höhere Motordrehzahl (n_{M} > n_{L_min}) und ein höheres Motormoment (M_{M} > M_{VL}(n_{L_min})) eingestellt (Betriebspunkt P₁''', Zeitpunkt t2') und dort gehalten, bis sich an der Reibungskupplung Synchronlauf (n_{M} = n_{GE}) eingestellt hat (Betriebspunkt P₂"', Zeitpunkt t3"), wonach die Reibungskupplung vollständig geschlossen wird.

Die verwendete Verfahrensvariante kann fahrzeug- oder einsatzspezifisch fest vorgegeben sein oder in Abhängigkeit von aktuellen Betriebsparametern, insbesondere von der Relation des in Betriebspunkt P₁" vorliegenden Motormomentes (M_{M} = M_{VL}(n_{L_min})) zu dem von dem Fahrer angeforderten Sollmoment Mₛₒₗₗ, ausgewählt werden.

### Bezugszeichen

- A: Betriebsbereich
- B: Betriebsbereich
- C: Betriebsbereich
- D: Betriebsbereich
- E: Betriebsbereich
- F: Betriebsbereich
- M: Drehmoment
- M_{FW}: Fahrwiderstandsmoment
- M_{M}: Motormoment
- Mₘₐₓ: Maximalmoment
- M_{S}: Saugmoment
- Mₛₒₗₗ: Sollmoment
- M_{VL}: Volllastmoment
- n: Drehzahl
- n_{GE}: Getriebeeingangsdrehzahl
- n_{idle}: Leerlaufdrehzahl
- n_{L_min}: Ladegrenzdrehzahl
- nₗᵢₘ: Abregeldrehzahl
- n_{M}: Motordrehzahl
- p: Druck
- p_{L}: Ladedruck
- p_{L_min}: Ladedruckgrenzwert
- P₀: Betriebspunkt
- P₁: Betriebspunkt
- P₁': Betriebspunkt
- P₁": Betriebspunkt
- P₁"': Betriebspunkt
- P₂: Betriebspunkt
- P₂': Betriebspunkt
- P₂": Betriebspunkt
- P₂'": Betriebspunkt
- t: Zeit
- 10: Zeitpunkt
- t0': Zeitpunkt
- t0": Zeitpunkt
- t1: Zeitpunkt
- t1': Zeitpunkt
- t1": Zeitpunkt
- t2: Zeitpunkt
- t2': Zeitpunkt
- t3: Zeitpunkt
- t3': Zeitpunkt
- t3": Zeitpunkt
- V: Betriebsbereich
- Δn_{M}: Drehzahlerhöhung

## Patentansprüche

1. Verfahren zur Fahrsteuerung eines Kraftfahrzeugs, dessen Antriebsstrang einen als turboaufgeladenen Verbrennungsmotor ausgebildeten Antriebsmotor, eine als automatisierte Reibungskupplung ausgebildete Anfahrund Schaltkupplung, und ein als automatisiertes Stufenschaltgetriebe ausgebildetes Fahrgetriebe umfasst, wobei eine während der Fahrt auftretende Durchzugsschwäche des Antriebsmotors überwunden wird, die bei einer einem über dem spontan erreichbaren Maximalmoment (Mₘₐₓ) liegenden Sollmoment (Mₛₒₗₗ) des Antriebsmotors entsprechenden Leistungsanforderung des Fahrers auftritt, **dadurch gekennzeichnet, dass** zunächst die Reibungskupplung bis zum Übergang in den Schlupfbetrieb geöffnet wird, dass dann der Antriebsmotor bis an die Ladegrenzdrehzahl (n_{L_min}) oder eine geringfügig über der Ladegrenzdrehzahl (n_{L_min}) liegende Motordrehzahl (n_{M}) beschleunigt wird (n_{M} = n_{L_min}) n_{M} = n_{L_min} + Δn_{M}), und dass der Antriebsmotor dann bei weitgehend konstanter Motordrehzahl (n_{M} ≈ n_{L_min}) bis nahe an das Volllastmoment (M_{VL}(n_{L_min})) belastet wird, bevor der Schlupfbetrieb der Reibungskupplung beendet wird.

2. Verfahren nach Anspruch 1, **dadurch gekennzeichnet, dass** die Motordrehzahl (n_{M}) durch ein weiteres Schließen der Reibungskupplung und/oder durch einen Eingriff in die Motorsteuerung auf die Getriebeeingangsdrehzahl (n_{GE}) abgesenkt (n_{M} = n_{GE}, n_{M} < n_{L_min}) und dann die Reibungskupplung vollständig geschlossen wird.

3. Verfahren nach Anspruch 2, **dadurch gekennzeichnet, dass** das Verfahren mit den Merkmalen des Anspruchs 2 durchgeführt wird, wenn das aktuelle Motormoment (M_{M}(n_{L_min})) deutlich über dem Sollmoment (Mₛₒₗₗ) des Antriebsmotors liegt (M_{M}(n_{L_min}) >> Mₛₒₗₗ).

4. Verfahren nach Anspruch 1, **dadurch gekennzeichnet, dass** der Antriebsmotor auf der aktuellen Motordrehzahl (n_{M} = n_{L_min}) und die Reibungskupplung auf dem aktuellen Öffnungsgrad gehalten wird, bis sich an der Reibungskupplung Synchronlauf eingestellt hat (n_{M} = n_{GE}), und dass dann die Reibungskupplung vollständig geschlossen wird.

5. Verfahren nach Anspruch 4, **dadurch gekennzeichnet, dass** das Verfahren mit den Merkmalen des Anspruchs 4 durchgeführt wird, wenn das aktuelle Motormoment (M_{M}(n_{L_min})) weitgehend dem Sollmoment (Mₛₒₗₗ) des Antriebsmotors entspricht oder geringfügig über diesem liegt ((M_{M}(n_{L_min}) ≥ Mₛₒₗₗ).

6. Verfahren nach Anspruch 1, **dadurch gekennzeichnet, dass** der Antriebsmotor durch eine Erhöhung der Motorleistung und ein weiteres Schließen der Reibungskupplung auf eine höhere Motordrehzahl (n_{M} > n_{L_min}) sowie ein höheres Motormoment (M_{M} > M_{VL}(n_{L_min})) eingestellt und dort gehalten wird, bis sich an der Reibungskupplung Synchronlauf eingestellt hat (n_{M} = n_{GE}), und dass dann die Reibungskupplung vollständig geschlossen wird.

7. Verfahren nach Anspruch 4, **dadurch gekennzeichnet, dass** das Verfahren mit den Merkmalen des Anspruchs 6 durchgeführt wird, wenn das aktuelle Motormoment (M_{M}(n_{L_min})) deutlich unter dem Sollmoment (Mₛₒₗₗ) des Antriebsmotors liegt (M_{M}(n_{L_min}) << Mₛₒₗₗ)

8. Verfahren nach einem der Ansprüche 1 bis 7, **dadurch gekennzeichnet, dass** eine vorliegende oder unmittelbar bevorstehende Durchzugsschwäche des Antriebsmotors dadurch erkannt wird, dass das aktuelle Motormoment (M_{M}) kleiner oder gleich dem Saugmoment (M_{S}) des Antriebsmotors ist (M_{M} ≤ M_{S}), dass die aktuelle Motordrehzahl (n_{M}) kleiner als die Ladegrenzdrehzahl (n_{L_min}) des Antriebsmotors ist (n_{M} < n_{L_min}), und dass das Sollmoment (Mₛₒₗₗ) des Antriebsmotors über dem Saugmoment (M_{S}) des Antriebsmotors liegt (Mₛₒₗₗ > Ms).

9. Verfahren nach einem der Ansprüche 1 bis 8, **dadurch gekennzeichnet, dass** eine vorliegende oder unmittelbar bevorstehende Durchzugsschwäche des Antriebsmotors dadurch erkannt wird, dass das aktuelle Fahrwiderstandsmoment (M_{FW}) größer als das spontan abrufbare Maximalmoment (Mₘₐₓ) des Antriebsmotors ist (M_{FW} > Mₘₐₓ), und dass das Sollmoment (Mₛₒₗₗ) des Antriebsmotors über dem aktuellen Fahrwiderstandsmoment (M_{FW}) liegt (Mₛₒₗₗ > M_{FW}).

10. Verfahren nach einem der Ansprüche 1 bis 9, **dadurch gekennzeichnet, dass** eine vorliegende oder unmittelbar bevorstehende Durchzugsschwäche des Antriebsmotors dadurch erkannt wird, dass der aktuelle Ladedruck (p_{L}) des Antriebsmotors kleiner als ein für einen Ladedruckaufbau durch den Abgasturbolader kennzeichnender Ladedruckgrenzwert (p_{L_min}) ist (p_{L} < p_{L_min}), und dass der Antriebsmotor für die Erzeugung des Sollmomentes (Mₛₒₗₗ) einen über dem Ladedruckgrenzwert (p_{L_min}) liegenden Ladedruck (p_{L} ≥ p_{L_min}) benötigt (Mₛₒₗₗ > Ms).

11. Verfahren nach einem der Ansprüche 1 bis 10, **dadurch gekennzeichnet, dass** das durch die erfindungsgemäße Fahrsteuerung erreichbare Motormoment (M_{VL}(n_{M})) vorab ermittelt wird, und dass die Fahrsteuerung nach wenigstens einem der Ansprüche 1 bis 7 nur dann durchgeführt wird, wenn das erreichbare Motormoment (M_{VL}(n_{M})) zumindest dem aktuellen Fahrwiderstandsmoment (M_{FW}) entspricht (M_{VL}(n_{M}) ≥ M_{FW}).

12. Verfahren nach Anspruch 11, **dadurch gekennzeichnet, dass** das durch die erfindungsgemäße Fahrsteuerung erreichbare Motormoment (M_{M}(n_{M})) aus der Volllast-Kennlinie des Antriebsmotors als das bei der aktuellen Motordrehzahl (n_{M}) einstellbare Volllastmoment (M_{VL}(n_{M})) bestimmt wird.

13. Verfahren nach einem der Ansprüche 1 bis 12, **dadurch gekennzeichnet, dass** die durch die erfindungsgemäße Fahrsteuerung bewirkte thermische Belastung der Reibungskupplung vorab ermittelt wird, und dass die Fahrsteuerung nach wenigstens einem der Ansprüche 1 bis 7 nur dann durchgeführt wird, wenn die thermische Belastung der Reibungskupplung einen vorgegebenen Belastungsgrenzwert nicht überschreitet.

14. Verfahren nach einem der Ansprüche 1 bis 13, **dadurch gekennzeichnet, dass** die Fahrsteuerung nach wenigstens einem der Ansprüche 1 bis 7 nur dann durchgeführt wird, wenn der aktuell eingelegte Gang einen vorab festgelegten Maximalgang nicht übersteigt.

15. Verfahren nach einem der Ansprüche 1 bis 14, **dadurch gekennzeichnet, dass** die Fahrsteuerung nach wenigstens einem der Ansprüche 1 bis 7 nur dann durchgeführt wird, wenn kein niedrigerer Gang für eine Rückschaltung verfügbar ist.

16. Verfahren nach einem der Ansprüche 1 bis 15, **dadurch gekennzeichnet, dass** die Fahrsteuerung nach wenigstens einem der Ansprüche 1 bis 7 nur dann durchgeführt wird, wenn der aktuell eingelegte Gang dem unter den aktuellen Betriebs- und Umgebungsbedingungen vorgesehenen Anfahrgang entspricht.

17. Verfahren nach einem der Ansprüche 1 bis 16, **dadurch gekennzeichnet, dass** die Fahrsteuerung nach wenigstens einem der Ansprüche 1 bis 7 nur dann durchgeführt wird, wenn eine Rückschaltung unter den aktuellen Betriebs- und Umgebungsbedingungen zu einem Fahrzeugstillstand und einem anschließenden Anfahren führen würde.

18. Verfahren nach einem der Ansprüche 1 bis 17, **dadurch gekennzeichnet, dass** die Fahrsteuerung nach wenigstens einem der Ansprüche 1 bis 7 nur dann durchgeführt wird, wenn die Fahrpedalstellung eine vorab festgelegte Grenzstellung erreicht oder überschritten hat.

19. Verfahren nach einem der Ansprüche 1 bis 18, **dadurch gekennzeichnet, dass** die Fahrsteuerung nach wenigstens einem der Ansprüche 1 bis 7 nur dann durchgeführt wird, wenn diese als fahrzeug- oder einsatzspezifische Sonderfunktion freigegeben ist.

## Claims

1. Drive control method of a motor vehicle, the drive train of which comprises a drive engine which is embodied as a turbo-charged internal combustion engine, a start and shift clutch which is embodied as an automated friction clutch, and a transmission which is embodied as an automated step-by-step variable speed transmission, wherein a traction weakness of the drive engine which occurs during travel is overcome, said traction weakness occurring when there is a power request that corresponds to a setpoint torque (Mₛₑₜₚ) of the drive engine which is above the maximum torque (Mₘₐₓ) which can be achieved spontaneously, **characterized in that** firstly the friction clutch is opened to the transition into the slip operating mode, **in that** the drive engine is then accelerated to the charging limit rotational speed (n_{L_min}) or to an engine rotational speed (n_{M}) which is slightly above the charging limit rotational speed (n_{L_min}) (n_{M} = n_{L_min}; n_{M} = n_{L_min} + Δn_{M}), and **in that** the drive engine is then loaded to close to the full load torque (M_{VL}(n_{L_min})) with the engine rotational speed (n_{M} ≈ n_{L_min}) largely constant before the slip operating mode of the friction clutch is ended.

2. Method according to Claim 1, **characterized in that** the engine rotational speed (n_{M}) is lowered to the transmission input rotational speed (n_{GE}) (n_{M} = n_{GE}, n_{M} < n_{L_min}) by further closing of the friction clutch and/or by intervention in the engine controller, and the friction clutch is then completely closed.

3. Method according to Claim 2, **characterized in that** the method with the features of Claim 2 is carried out if the current engine torque (M_{M}(n_{L_min})) is significantly above the setpoint torque (Mₛₑₜₚ) of the drive engine (M_{M}(n_{L_min}) >> Mₛₑₜₚ).

4. Method according to Claim 1, **characterized in that** the drive engine is held at the current engine rotational speed (n_{M} = n_{L_min}) and the friction clutch is held at the current degree of opening until synchronous running has been established at the frictional clutch (n_{M} = n_{GE}), and **in that** the friction clutch is then completely closed.

5. Method according to Claim 4, **characterized in that** the method having the features of Claim 4 is carried out if the current engine torque (M_{M}(n_{L_min})) corresponds largely to the setpoint torque (Mₛₑₜₚ) of the drive engine or is slightly above it (M_{M}(n_{L_min}) ≥ Mₛₑₜₚ).

6. Method according to Claim 1, **characterized in that** the drive engine is set to a relatively high engine rotational speed (n_{M} > n_{L_min}) and a relatively high engine torque (M_{M} > M_{VL}(n_{L_min})) by increasing the engine power and further closing the friction clutch, and is held there until synchronous running has been established at the friction clutch (n_{M} = n_{GE}), and **in that** the friction clutch is then completely closed.

7. Method according to Claim 4, **characterized in that** the method having the features of Claim 6 is carried out if the current engine torque (M_{M}(n_{L_min})) is significantly below the setpoint torque (Mₛₑₜₚ) of the drive engine (M_{M}(n_{L_min})) << Mₛₑₜₚ).

8. Method according to one of Claims 1 to 7, **characterized in that** a present or immediately imminent traction weakness of the drive engine is detected **in that** the current engine torque (M_{M}) is less than or equal to the suction torque (M_{S}) of the driver engine (M_{M} ≤ M_{S}), **in that** the current engine rotational speed (nₘ), is lower than the charging limit rotational speed (n_{L_min}) of the drive engine (n_{M} < n_{L_min}), and **in that** the setpoint torque (Mₛₑₜₚ) of the drive engine is above the suction torque (M_{S}) of the drive engine (Mₛₑₜₚ > M_{S}).

9. Method according to one of Claims 1 to 8, **characterized in that** a present or immediately imminent traction weakness of the drive engine is detected **in that** the current driving resistance torque (M_{FW}) is higher than the maximum torque (Mₘₐₓ), which can be called spontaneously, of the drive engine (M_{FW} > Mₘₐₓ), and **in that** the setpoint torque (Mₛₑₜₚ) of the drive engine is above the current driving resistance torque (M_{FW}) (Mₛₑₜₚ > M_{FW}).

10. Method according to one of Claims 1 to 9, **characterized in that** a present or immediately imminent traction weakness of the drive engine is detected **in that** the current charging pressure (p_{L}) of the drive engine is lower than a charging pressure limiting value (p_{L_min}) which characterizes a charging pressure build up by the exhaust gas turbocharger (P_{L} < P_{L_min}), and **in that** the drive engine for generating the setpoint torque (Mₛₑₜₚ) requires a charging pressure (p_{L} ≥ p_{L_min}) which is above the charging pressure limiting value (P_{L_min}) (Mₛₑₜₚ > M_{S}).

11. Method according to one of Claims 1 to 10, **characterized in that** the engine torque (M_{VL}(n_{M})) which can be achieved by means of the drive control according to the invention is determined in advance, and **in that** the drive control according to at least one of Claims 1 to 7 is carried out only when the achievable engine torque (M_{VL}(n_{M})) corresponds at least to the current driving resistance torque (M_{FW}) (M_{VL}(n_{M}) ≥ M_{FW}).

12. Method according to Claim 11, **characterized in that** the engine torque (M_{M}(n_{M})) which can be achieved by means of the drive control according to the invention is determined from the full-load characteristic curve of the drive engine as the full-load torque (M_{VL}(n_{M})) which can be set at the current engine rotational speed (n_{M}).

13. Method according to one of Claims 1 to 12, **characterized in that** the thermal loading of the friction clutch which can be brought about by means of the drive control according to the invention is determined in advance, and **in that** the drive control according to at least one of Claims 1 to 7 is carried out only when the thermal load of the friction clutch does not exceed a predefined load limiting value.

14. Method according to one of Claims 1 to 13, **characterized in that** the drive control according to at least one of Claims 1 to 7 is carried out only when the currently engaged gearspeed does not exceed a previously defined maximum gearspeed.

15. Method according to one of Claims 1 to 14, **characterized in that** the drive control according to at least one of Claims 1 to 7 is carried out only when there is no relatively low gearspeed available for shifting back.

16. Method according to one of Claims 1 to 15, **characterized in that** the drive control according to at least one of Claims 1 to 7 is carried out only when the currently engaged gearspeed corresponds to the starting gearspeed which is provided under the current operating and environmental conditions.

17. Method according to one of Claims 1 to 16, **characterized in that** the drive control according to at least one of Claims 1 to 7 is carried out only when shifting back under the current operating and environmental conditions would lead to a stationary state of the vehicle and subsequent starting.

18. Method according to one of Claims 1 to 17, **characterized in that** the drive control according to at least one of Claims 1 to 7 is carried out only when the accelerator pedal position has reached or passed a previously defined limiting position.

19. Method according to one of Claims 1 to 18, **characterized in that** the drive control according to at least one of Claims 1 to 7 is carried out only when the latter is enabled as a vehicle-specific or use-specific special function.

## Revendications

1. Procédé pour la commande d'entraînement d'un véhicule automobile, dont la chaîne cinématique comprend un moteur d'entraînement réalisé sous la forme d'un moteur à combustion interne à suralimentation, un embrayage de démarrage et de commutation réalisé sous la forme d'un embrayage à friction automatisé et une transmission réalisée sous la forme d'une transmission à changement de vitesse étagée automatisée, une faiblesse de traction du moteur d'entraînement se produisant pendant la conduite, laquelle se produit dans le cas d'une demande de puissance du conducteur correspondant à un couple de consigne (M_{Soll}) situé au-dessus du couple maximum (Mₘₐₓ) du moteur d'entraînement pouvant être obtenu spontanément, étant surmontée, **caractérisé en ce que** tout d'abord l'embrayage à friction est ouvert jusqu'au passage au mode de glissement, **en ce que** le moteur d'entraînement est ensuite accéléré jusqu'au régime de charge limite (n_{L_min}) ou jusqu'à un régime moteur (n_{M}) situé légèrement au-dessus du régime de charge limite (n_{L_min}) (n_{M} = n_{L_min}; n_{M} = n_{L_min} + Δn_{M}), et **en ce que** le moteur d'entraînement est alors sollicité presque jusqu'au couple de pleine charge (M_{VL}(n_{L_min})) en conservant un régime moteur essentiellement constant (n_{M} ≈ n_{L_min}), avant que le mode de glissement de l'embrayage à friction ne soit terminé.

2. Procédé selon la revendication 1, **caractérisé en ce que** le régime moteur (n_{M}) est réduit par une fermeture supplémentaire de l'embrayage friction et/ou par une intervention dans la commande du moteur sur le régime d'entrée de la transmission (n_{GE}) (n_{M} = n_{GE}, n_{M} < n_{L_min}), puis l'embrayage friction est complètement fermé.

3. Procédé selon la revendication 2, **caractérisé en ce que** le procédé est mis en oeuvre avec les caractéristiques de la revendication 2, lorsque le couple moteur actuel (M_{M}(n_{L_min})) se situe nettement au-dessus du couple de consigne (M_{Soll}) du moteur d'entraînement (M_{M}(n_{L_min}) >> M_{Soll}).

4. Procédé selon la revendication 1, **caractérisé en ce que** le moteur d'entraînement est maintenu au régime moteur actuel (n_{M} = _{nL_min}) et l'embrayage à friction est maintenu au degré d'ouverture actuel jusqu'à ce qu'un fonctionnement synchrone se soit établi au niveau de l'embrayage à friction (n_{M} = n_{GE}), et **en ce que** l'embrayage à friction est alors complètement fermé.

5. Procédé selon la revendication 4, **caractérise en ce que** le procédé est mis en oeuvre avec les caractéristiques de la revendication 4, lorsque le couple moteur actuel (M_{M}(n_{L_min})) correspond essentiellement au couple de consigne (M_{Soll}) du moteur d'entraînement ou se situe légèrement au-dessus de celui-ci (M_{M}(n_{L_min}) ≥ M_{Soll}).

6. Procédé selon la revendication 1, **caractérisé en ce que** le moteur d'entraînement est ajusté par une augmentation de la puissance du moteur et une fermeture supplémentaire de l'embrayage à friction à un régime moteur supérieur (n_{M} > _{nL_min}) et à un couple moteur supérieur (M_{M} > M_{VL}(n_{L_min})) et y est maintenu jusqu'à ce qu'un fonctionnement synchrone se soit établi au niveau de l'embrayage à friction (n_{M} = n_{GE}), et **en ce que** l'embrayage à friction est ensuite complètement fermé.

7. Procédé selon la revendication 4, **caractérisé en ce que** le procédé est mis en oeuvre avec les caractéristiques de la revendication 6, lorsque le couple moteur actuel (M_{M}(n_{L_min})) se situe nettement en dessous du couple de consigne (M_{Soll}) du moteur d'entraînement (M_{M}(n_{L_min}) << M_{Soll}).

8. Procédé selon l'une quelconque des revendications 1 à 7, **caractérisé en ce qu'**une faiblesse de traction du moteur d'entraînement actuelle ou imminente est reconnue par le fait que le couple moteur actuel (M_{M}) est inférieur ou égal au couple d'admission (M_{S}) du moteur d'entraînement (M_{M} ≤ M_{S}), que le régime moteur actuel (n_{M}) est inférieur au régime de charge limite (n_{L_min}) du moteur d'entraînement (n_{M} < n_{L_min}) et que le couple de consigne (M_{Soll}) du moteur d'entraînement est situé au-dessus du couple d'admission (M_{S}) du moteur d'entraînement (M_{Soll} > M_{S}).

9. Procédé selon l'une quelconque des revendications 1 à 8, **caractérisé en ce qu'**une faiblesse de traction du moteur d'entraînement actuelle ou imminente est reconnue par le fait que le couple actuel de résistance à l'avancement (M_{FW}) est supérieur au couple maximum (Mₘₐₓ) du moteur d'entraînement pouvant être demandé spontanément ((M_{FW} > Mₘₐₓ), et que le couple de consigne (M_{Soll}) du moteur d'entraînement se situe au-dessus du couple actuel de résistance à l'avancement (M_{FW}) (M_{Soll} > M_{FW}).

10. Procédé selon l'une quelconque des revendications 1 à 9, **caractérisé en ce qu'**une faiblesse de traction du moteur d'entraînement actuelle ou imminente est reconnue par le fait que la pression de suralimentation actuelle (p_{L}) du moteur d'entraînement est inférieure à une valeur limite de pression de suralimentation (p_{L_min}) (p_{L} < p_{L_min}) caractéristique pour une augmentation de la pression de suralimentation par le turbocompresseur à gaz d'échappement, et que le moteur d'entraînement, pour produire le couple de consigne (M_{Soll}), a besoin d'une pression de suralimentation au-dessus de la valeur limite de pression de suralimentation (p_{L_min}) (p_{L} > p_{L_min}) (M_{Soll} > M_{S}).

11. Procédé selon l'une quelconque des revendications 1 à 10, **caractérisé en ce que** le couple moteur (M_{VL}(n_{M})) pouvant être obtenu par la commande d'entraînement selon l'invention est déterminé préalablement, et **en ce que** la commande d'entraînement selon au moins l'une quelconque des revendications 1 à 7 est effectuée seulement lorsque le couple moteur (M_{VL}(n_{M})) pouvant être obtenu correspond au moins au couple actuel de résistance à l'avancement (M_{FW}) (M_{VL}(n_{M}) ≥ M_{FW}).

12. Procédé selon la revendication 11, **caractérisé en ce que** le couple moteur (M_{M}(n_{M})) pouvant être obtenu par la commande d'entraînement selon l'invention est déterminé à partir de la courbe caractéristique de pleine charge du moteur d'entraînement en tant que le couple de pleine charge (M_{VL}(n_{M}) pouvant être ajusté au régime moteur actuel (n_{M}).

13. Procédé selon l'une quelconque des revendications 1 à 12, **caractérisé en ce que** la contrainte thermique de l'embrayage à friction provoquée par la commande d'entraînement selon l'invention est déterminée au préalable et **en ce que** la commande d'entraînement selon au moins l'une quelconque des revendications 1 à 7 est mise en oeuvre seulement lorsque la contrainte thermique de l'embrayage à friction ne dépasse pas une valeur limite de contrainte prédéfinie.

14. Procédé selon l'une quelconque des revendications 1 à 13, **caractérisé en ce que** la commande de conduite selon au moins l'une quelconque des revendications 1 à 7 est mise en oeuvre seulement lorsque le rapport actuellement enclenché ne dépasse pas un rapport maximum fixé préalablement.

15. Procédé selon l'une quelconque des revendications 1 à 14, **caractérisé en ce que** la commande d'entraînement selon au moins l'une quelconque des revendications 1 à 7 est mise en oeuvre seulement lorsqu'aucun rapport inférieur pour un rétrogradage n'est disponible.

16. Procédé selon l'une quelconque des revendications 1 à 15, **caractérisé en ce que** la commande d'entraînement selon au moins l'une quelconque des revendications 1 à 7 est mise en oeuvre seulement lorsque le rapport actuellement enclenché correspond au rapport de démarrage prévu dans les conditions actuelles de fonctionnement et d'environnement.

17. Procédé selon l'une quelconque des revendications 1 à 16, **caractérisé en ce que** la commande d'entraînement selon au moins l'une quelconque des revendications 1 à 7 est mise en oeuvre seulement lorsqu'un rétrogradage dans les conditions actuelles de fonctionnement et d'environnement conduirait à un arrêt du véhicule et un démarrage subséquent.

18. Procédé selon l'une quelconque des revendications 1 à 17, **caractérisé en ce que** la commande d'entraînement selon au moins l'une quelconque des revendications 1 à 7 est mise en oeuvre seulement lorsque la position de la pédale d'accélérateur a atteint ou dépassé une position limite fixée préalablement.

19. Procédé selon l'une quelconque des revendications 1 à 18, **caractérisé en ce que** la commande d'entraînement selon au moins l'une quelconque des revendications 1 à 7 est mise en oeuvre seulement lorsque celle-ci est activée en tant que fonction spéciale spécifique au véhicule ou à l'utilisation.
